# EUROPÄISCHE PATENTANMELDUNG

(11) **EP 4 431 987 A1**
(43) Veröffentlichungstag der Anmeldung: **18.09.2024**
(21) Anmeldenummer: 23161947.9
(22) Anmeldetag: 15.03.2023
(51) Int. Cl.: G01V 8/20, G01V 8/22

(54) **LICHTVORHANG**

(71) Anmelder: Leuze electronic GmbH + Co. KG, 73277 Owen/Teck (DE)
(72) Erfinder: Feller, Bernhard, 86316 Friedberg (DE); Sillge, Ray, 80995 München (DE); Auer, Robert, 85540 Haar (DE); Olbrich, Sebastian, 80992 München (DE); Pychal, Martin, 85221 Dachau (DE); Heckmayr, Alexander, 86807 Buchloe (DE)
(74) Vertreter: Ruckh, Rainer Gerhard

(57) **Zusammenfassung**

Die Erfindung betrifft einen Lichtvorhang (1) zur Erfassung von Objekten (O) in einem Überwachungsbereich. Der Lichtvorhang (1) umfasst eine Reihenanordnung von Lichtstrahlen (3) emittierenden Sendern (4a-4h) und eine Reihenanordnung von Lichtstrahlen (3) emittierenden Empfängern (7a-7h). Bei freiem Überwachungsbereich werden die Lichtstrahlen (3) der Sender (4a-4h) durch den Überwachungsbereich geführt und treffen auf einen zugeordneten Empfänger (7a-7h). Bei einem Objekteingriff im Überwachungsbereich sind die Lichtstrahlen (3) wenigstens eines Senders (4a-4h) unterbrochen. In einer Auswerteeinheit (8) wird abhängig von Empfangssignalen der Empfänger (7a-7h) ein Objektfeststellungssignal generiert. Erfindungsgemäß sind jedem Empfänger (7a-7h) wenigstens zwei parallel geschaltete Arbeitswiderstände (18a, 19a, 18b, 19b, ...) zugeordnet.

## Beschreibung

Die Erfindung betrifft einen Lichtvorhang und ein Verfahren zum Betrieb eines Lichtvorhangs.

Derartige Lichtvorhänge dienen generell zur Erfassung von Objekten in einem Überwachungsbereich. Der Lichtvorhang umfasst ein Sendergehäuse mit einer Reihenanordnung von Lichtstrahlen emittierenden Sendern und ein Empfängergehäuse mit einer Reihenanordnung von Lichtstrahlen empfangenden Empfängern. Für den Arbeitsbetrieb des Lichtvorhangs sind das Sendergehäuse und Empfängergehäuse an gegenüberliegenden Rändern des Überwachungsbereichs so angeordnet, dass bei freiem Überwachungsbereich die Lichtstrahlen jeweils eines Senders ungehindert auf einen diesem Sender zugeordneten Empfänger auftreffen. Der Sender und der zugeordnete Empfänger bilden eine Strahlachse des Lichtvorhangs. In einer Auswerteeinheit wird abhängig von den Empfangssignalen der Empfänger ein Objektfeststellungssignal generiert. Vorteilhaft ist das Objektfeststellungssignal ein binäres Schaltsignal, dessen Schaltzustände angeben, ob sich ein Objekt im Überwachungsbereich befindet oder nicht.

Derartige Lichtvorhänge können als Sicherheitssensoren ausgebildet sein und in Applikationen im Bereich der Sicherheitstechnik eingesetzt werden. Hierzu ist es erforderlich, dass der Lichtvorhang einen fehlersicheren Aufbau aufweist, wobei Fehlersicherheit bedeutet, dass im Lichtvorhang vorhandene Fehler aufgedeckt bzw. beherrscht werden können.

Eine Maßnahme hierfür besteht darin, dass die Auswerteeinheit einen redundanten, insbesondere mehrkanaligen Aufbau aufweist. Dies kann dadurch realisiert werden, dass die Auswerteeinheit aus zwei sich gegenseitig zyklisch überwachenden Rechnereinheiten besteht. Dadurch wird eine fehlersichere Auswertung der Empfangssignale der Empfänger ermöglicht.

Ein weiteres Problem besteht darin, Hardware-Fehler zu beherrschen. Ein Beispiel hierfür sind Arbeitswiderstände zur Arbeitspunktvorgabe der Empfänger, was für einen fehlerfreien Betrieb der Empfänger und damit für eine sichere Objektdetektion erforderlich ist.

Bei einem Fehlerfall, wie z.B. einem Kurzschluss des Arbeitswiderstands oder einer Unterbrechung des Arbeitswiderstands, d.h. einer Unterbrechung der Verbindung zwischen Arbeitswiderstand und Empfänger, ist keine zuverlässige Arbeitspunkteinstellung des Empfängers mehr gegeben, was zu Fehlfunktionen des zugeordneten Empfängers und dadurch bedingt zu Fehlern bei der Objektdetektion führen kann.

Der Erfindung liegt die Aufgabe zugrunde, einen Lichtvorhang mit erhöhter Fehlersicherheit bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich mit einer Reihenanordnung von Lichtstrahlen emittierenden Sendern und einer Reihenanordnung von Lichtstrahlen emittierenden Empfängern. Bei freiem Überwachungsbereich werden die Lichtstrahlen der Sender durch den Überwachungsbereich geführt und treffen auf einen zugeordneten Empfänger. Bei einem Objekteingriff im Überwachungsbereich sind die Lichtstrahlen wenigstens eines Senders unterbrochen. In einer Auswerteeinheit wird abhängig von Empfangssignalen der Empfänger ein Objektfeststellungssignal generiert. Jedem Empfänger sind wenigstens zwei parallel geschaltete Arbeitswiderstände zugeordnet.

Die Erfindung betrifft weiterhin ein entsprechendes Verfahren.

Bei dem erfindungsgemäßen Lichtvorhang wird eine erhöhte Fehlersicherheit dadurch erzielt, dass jedem Empfänger nicht nur ein Arbeitswiderstand zugeordnet ist, sondern wenigstens zwei parallel geschaltete Arbeitswiderstände.

Generell dient ein Arbeitswiderstand zur Vorgabe des Arbeitspunkts des zugeordneten Empfängers, der generell von einem optoelektronischen Bauelement gebildet ist, anhand dessen Kennlinie der Arbeitspunkt definiert und optimal vorgegeben werden kann, was durch eine geeignete Dimensionierung des Arbeitswiderstands bewerkstelligt wird. Insbesondere sind die Empfänger des Lichtvorhangs von Fotodioden gebildet.

Durch die Zuordnung mehrerer parallel geschalteter Arbeitswiderstände zu einem Empfänger kann dessen Arbeitspunkt über einen weiten Temperaturbereich stabilisiert werden, wodurch für die Empfänger auch bei stark schwankenden Temperaturen ein gleichbleibend zuverlässiger Betrieb gewährleistet ist.

Ein weiterer Vorteil der Erfindung besteht darin, dass durch die Parallelschaltung mehrerer Arbeitswiderstände die Ausfallsicherheit des Lichtvorhangs erhöht wird.

Fällt ein Arbeitswiderstand durch eine Unterbrechung, insbesondere der Unterbrechung der Anschaltung zum zugeordneten Empfänger, aus, so ist wenigstens noch ein weiterer Arbeitswiderstand intakt und sorgt dafür, dass der Empfänger noch störungsfrei weiterbetrieben werden kann. Vorteilhaft sind hierbei die einem Empfänger zugeordneten Arbeitswiderstände so dimensioniert, dass bei Unterbrechung eines Arbeitswiderstands der neue Arbeitspunkt des Empfängers weiterhin im sicheren Bereich aufrechterhalten wird.

Für den Fall, dass zwei parallelgeschaltete Arbeitswiderstände einem Empfänger zugeordnet sind, wird eine Ein-Fehlersicherheit derart erhalten, dass der Ausfall eines Arbeitswiderstands nicht zu Fehlfunktionen des Empfängers führt. Für den Fall, dass mehr als zwei, beispielsweise drei Arbeitswiderstände einem Empfänger zugeordnet sind, wird eine Mehr-Fehlersicherheit erhalten, da auch bei Unterbrechung mehrerer Arbeitswiderstände immer noch ein Arbeitswiderstand vorhanden ist, der einen störungsfreien Betrieb gewährleistet.

Weiter vorteilhaft ist bei Unterbrechung eines Arbeitswiderstands der Reststrom des jeweiligen Empfängers immer noch größer als der Fotostrom der Fotodiode im beleuchteten Zustand.

Dadurch wird ein fehlerhaftes Durchschalten der Fotodiode vermieden und damit auch eine Fehldetektion des Lichtvorhangs.

Ein weiterer Vorteil der Erfindung besteht darin, dass bei einem Kurzschluss der Arbeitswiderstände der zugeordnete Empfänger in einen sicheren Zustand übergeht.

Dabei kann der Empfänger im sicheren Zustand kein Licht empfangen.

Der Fehlerfall eines Kurzschlusses wird somit dadurch beherrscht, dass unsichere Zustände und dadurch bedingte Fehlfunktionen des Lichtvorhangs vermieden werden.

Besonders vorteilhaft werden die Empfänger über eine Schiebekette angesteuert.

Vorteilhaft weist die Schiebekette eine Reihe von Schiebekettenelemente auf, wobei jeder Empfänger ein Schiebekettenelement aufweist. Über eine Steuerlogik wird eine logische 1 durch die Schiebekettenelemente geschoben, so dass immer nur ein Schiebekettenelement den Bitwert 1 aufweist, alle anderen Schiebekettenelemente den Bitwert 0 aufweisen. Dadurch werden die Empfänger adressiert und einzeln nacheinander aktiviert. Natürlich ist auch der invertierte Fall möglich, wo die Bitwerte 0 und 1 vertauscht sind.

Durch den dynamischen Signalwechsel von 1 auf 0 und umgekehrt können in der Steuerlogik bzw. der Auswerteeinheit Fehler, wie Schlüsse nach Plus oder Masse sowie Unterbrechungen von Arbeitswiderständen, aufgedeckt werden.

Derartige Ansteuerungen der Empfänger können insbesondere dazu genutzt werden, mehrere Empfänger einzeln nacheinander einem Verstärker, insbesondere Vorverstärker zur Verstärkung derer Empfangssignale, zuzuschalten.

Bei bestimmten Lichtvorhängen, bei denen nur ein Arbeitswiderstand jeweils einem Empfänger zugeordnet ist, kann eine Unterbrechung eines Arbeitswiderstands zu einem Fehlerfall derart führen, dass gleichzeitig mehrere Empfänger an den Vorverstärker durchgeschaltet werden. Die dabei erhaltenen Sensorströme mehrerer Empfänger können dazu führen, dass eine Strahlunterbrechung von Lichtstrahlen am jeweiligen Empfänger nicht erkannt wird, da dieser einen Fotostrom generiert, der einem beleuchteten Empfänger entspricht.

Derartige Fehlerfälle können mit dem erfindungsgemäßen Lichtvorhang vermieden werden, da jedem Empfänger mehrere Arbeitswiderstände zugeordnet sind. Bei Ausfall eines Arbeitswiderstands wird durch den wenigstens einen weiteren Arbeitswiderstand der Betrieb des jeweiligen Empfängers aufrechterhalten und derartige Fehler werden vermieden.

Gemäß einer vorteilhaften Ausführungsform der Erfindung bilden die einem Empfänger zugeordneten, parallel geschalteten Arbeitswiderstände eine diversitäre Anordnung.

Dadurch wird generell ausgeschlossen, dass alle Arbeitswiderstände, die einem Empfänger zugeordnet sind, durch dieselbe Fehlerursache beeinträchtigt werden oder ausfallen. Damit wird die Fehlersicherheit des Lichtvorhangs weiter erhöht.

Die diversitäre Anordnung von Arbeitswiderständen kann dadurch erzielt werden, dass die Arbeitswiderstände unterschiedliche Widerstandswerte aufweisen. Alternativ oder zusätzlich können die Arbeitswiderstände unterschiedliche Bauformen aufweisen.

Alternativ oder zusätzlich können die Arbeitswiderstände in unterschiedlichen Technologien hergestellt sein.

Schließlich ist es möglich, dass die Arbeitswiderstände auf oder an Elektronickomponenten in unterschiedlicher Orientierung und/oder Platzierung angeordnet sind.

Dabei sind vorteilhaft die Elektronikkomponenten Leiterplatten.

Beispielsweise können die Arbeitswiderstände auf unterschiedlichen Ebenen zu Leiterplatten angeordnet sein.

Gemäß einer ersten Variante arbeitet der Lichtvorhang nach dem Lichtschrankenprinzip.

In diesem Fall sind die Sender in einer Sendereinheit und die Empfänger in einer Empfängereinheit integriert, wobei die Sendereinheit und die Empfängereinheit an gegenüberliegenden Rändern des Überwachungsbereichs angeordnet sind.

Bei freiem Überwachungsbereich durchqueren die von den Sendern emittierten Lichtstrahlen den Überwachungsbereich und treffen auf die zugeordneten Empfänger.

Gemäß einer zweiten Variante ist der Lichtvorhang ein Reflexions-Lichtvorhang.

In diesem Fall sind die Sender und Empfänger in einer Sender-Empfängereinheit integriert, die sich an einem Rand des Überwachungsbereichs befindet. Am gegenüberliegenden Rand des Überwachungsbereichs befindet sich ein Reflektor. Bei freiem Überwachungsbereich durchqueren die von den Sendern emittierten Lichtstrahlen den Überwachungsbereich und treffen auf den Reflektor. Dort werden die Lichtstrahlen reflektiert, durchqueren nochmals den Überwachungsbereich und treffen auf die zugeordneten Empfänger.

Gemäß einer vorteilhaften Ausgestaltung ist der Lichtvorhang als Sicherheitssensor ausgebildet und kann im Bereich der Sicherheitstechnik, insbesondere im Bereich des Personenschutzes eingesetzt werden. Hierzu weist der Sicherheitssensor einen fehlersicheren Aufbau auf. Dieser kann insbesondere durch eine zweikanalige Auswerteeinheit in Form zweier sich zyklisch gegenseitig überwachender Rechnereinheiten ausgebildet sein.

In diesem Fall generiert der als Sicherheitssensor ausgebildete Lichtvorhang vorteilhaft ein Objektfeststellungssignal in Form eines binären Schaltsignals, dessen Schaltzustände angeben, ob sich ein Objekt im Überwachungsbereich befindet oder nicht.

Der Sicherheitssensor dient insbesondere zur Gefahrenbereichsüberwachung an einer Anlage. Mit dem Schaltsignal wird der Betrieb der Anlage gesteuert. Dabei wird der Betrieb der Anlage nur dann freigegeben, wenn mit dem Lichtvorhang ein freier Überwachungsbereich detektiert wird und ein entsprechendes Schaltsignal an die Anlagensteuerung ausgegeben wird.

Die Erfindung wird im Folgenden anhand der Zeichnungen erläutert. Es zeigen:
- Figur 1:: Ausführungsbeispiel des erfindungsgemäßen Lichtvorhangs.
- Figur 2:: Beispiel einer Schiebekette zur Ansteuerung der Empfänger des Lichtvorhangs gemäß Figur 1.
- Figur 3:: Empfängerschaltung für den Lichtvorhang gemäß Figur 1.

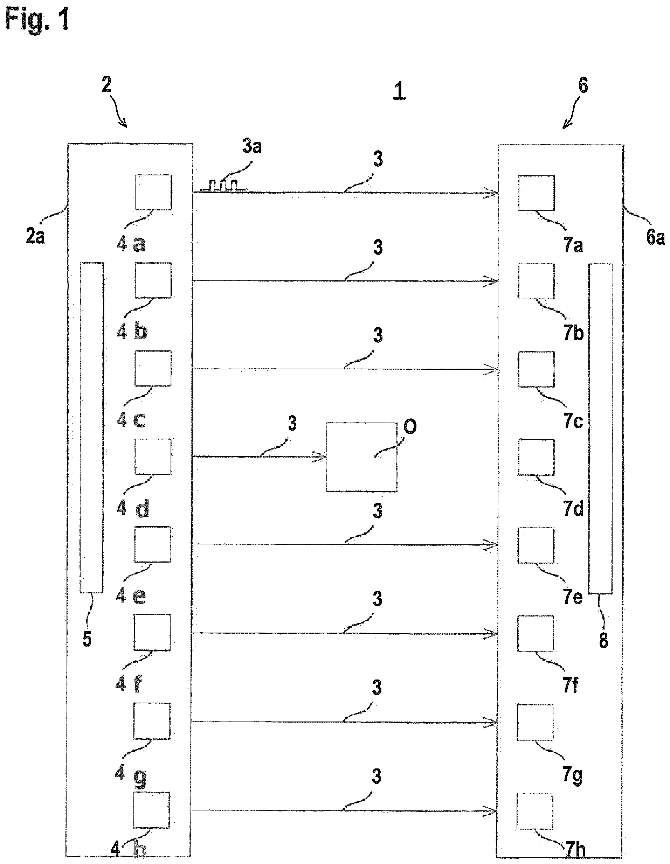

Figur 1 zeigt schematisch ein Ausführungsbeispiel des erfindungsgemäßen Lichtvorhangs 1.

Der Lichtvorhang 1 dient zur Objekterfassung in einem Überwachungsbereich. Der Lichtvorhang 1 weist eine Sendereinheit 2 mit einem sendeseitigen Gehäuse 2a auf, in welchem eine Reihenanordnung von Lichtstrahlen 3 emittierenden Sendern 4a-4h vorgesehen ist. Die Sender 4a-4h, die von Leuchtdioden oder dergleichen gebildet sind, emittieren Lichtstrahlen 3 in Form von Lichtimpulsen 3a, wie für den ersten Sender 4a in Figur 1 schematisch dargestellt. Die Sender 4a-4h werden von einer Sendersteuerung 5 gesteuert.

Der Lichtvorhang 1 weist weiterhin eine Empfängereinheit 6 auf, in deren empfangsseitigen Gehäuse 6a eine Reihenanordnung von Empfängern 7a-7h in Form von Fotodioden sowie eine Auswerteeinheit 8 integriert ist. Anstelle von Fotodioden können auch Fototransistoren oder dergleichen vorgesehen sein.

Die Sendereinheit 2 und die Empfängereinheit 6 sind an gegenüberliegenden Rändern des Überwachungsbereichs so angeordnet, dass bei freiem Überwachungsbereich die Lichtstrahlen 3 eines Senders 4a-4h auf den zugeordneten gegenüberliegenden Empfänger 7a-7h treffen, wie in Figur 1 dargestellt. Jeder Sender 4a-4h bildet mit dem zugeordneten Empfänger 7a-7h ein Sender-Empfänger-Paar. Die Sender-Empfänger-Paare werden in bekannter Weise über eine optische Synchronisierung zyklisch einzeln nacheinander aktiviert. Im vorliegenden Fall sind acht Sender-Empfänger-Paare vorgesehen. Natürlich kann ein Lichtvorhang 1 auch eine andere Anzahl von Sender-Empfänger-Paaren aufweisen. Ebenso kann eine elektrische, insbesondere leitungsgebundene Verbindung zwischen der Sendereinheit 2 und Empfängereinheit 6 vorgesehen sein.

Objekte O im Überwachungsbereich werden dadurch erfasst, dass der Strahlengang der Lichtstrahlen 3 wenigstens eines Sender-Empfänger-Paars unterbrochen wird. In Figur 1 ist ein Objekt mit "O" bezeichnet.

In der Auswerteeinheit 8 wird in Abhängigkeit der Empfangssignale ein Objektfeststellungssignal generiert, das über Ausgänge ausgegeben wird. Im vorliegenden Fall ist das Objektfeststellungssignal als binäres Schaltsignal generiert, dessen Schaltzustände angeben, ob sich ein Objekt O im Überwachungsbereich befindet oder nicht.

Der Lichtvorhang 1 ist im vorliegenden Fall als Sicherheitssensor ausgebildet und weist demzufolge einen fehlersicheren Aufbau auf. Hierzu weist die Auswerteeinheit 8 einen zweikanaligen Aufbau in Form zweier sich zyklisch überwachenden Rechnereinheiten auf.

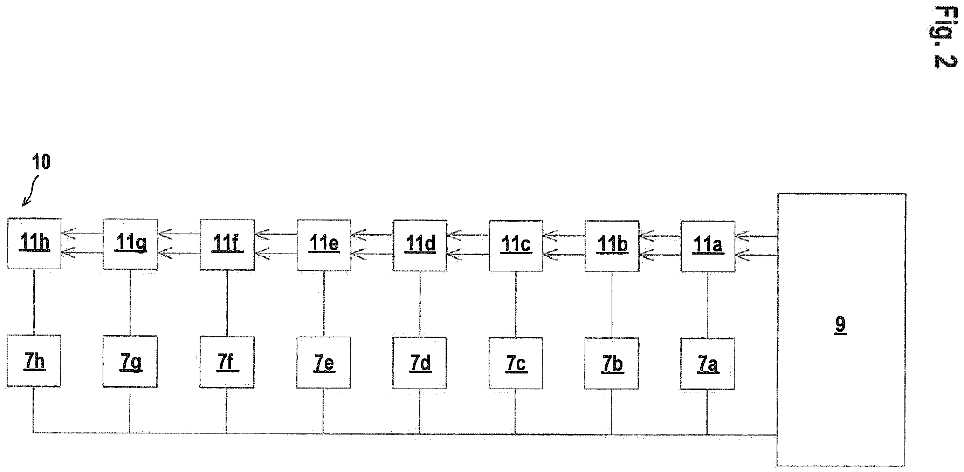

Figur 2 zeigt schematisch eine Ansteuerschaltung mit einer Schiebekette 10 zur Ansteuerung der Empfänger 7a-7h des Lichtvorhangs 1 gemäß Figur 1.

Die Ansteuerschaltung weist eine Steuerlogik 9 auf, die Bestandteil der Auswerteeinheit 8 ist.

Zur Ansteuerung der Empfänger 7a-7h ist eine Schiebekette 10 mit acht Schiebekettenelementen vorgesehen, die im vorliegenden Fall von FlipFlops 11a-11h gebildet sind. Durch die Steuerung der Steuerlogik 9 wird ein Bitwert, z.B. eine "1", durch die Schiebekettenelemente durchgeschoben, wodurch die Empfänger 7a-7h einzeln nacheinander aktiviert und adressiert werden.

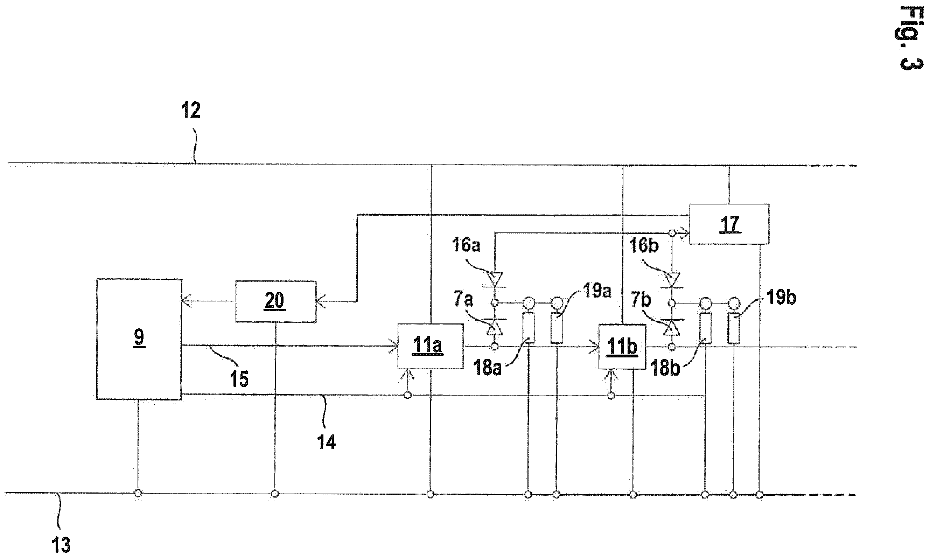

Figur 3 zeigt eine Empfängerschaltung für den Lichtvorhang 1 gemäß Figur 1. Der Übersichtlichkeit halber sind in Figur 3 nur zwei Empfänger 7a, 7b der insgesamt acht Empfänger 7a-7h dargestellt.

Figur 3 zeigt wieder die Steuerlogik 9 als Bestandteil der Auswerteeinheit 8. Die Komponenten der Empfängerschaltung sind an eine Spannungsversorgung 12 und an eine gemeinsame Masse 13 angeschlossen.

In Figur 3 sind entsprechend der Anzahl der dargestellten Empfänger 7a, 7b die FlipFlops 11a, 11b der Schiebekette 10 gemäß Figur 2 dargestellt.

Die Steuerlogik 9 gibt über eine Taktleitung 14 ein Taktsignal für die FlipFlops 11a-11h aus. Weiterhin erfolgt durch die Steuerlogik 9 über einer Steuerleitung 15 eine Ansteuerung der FlipFlops 11a-11h, die über Q und D verkettet sind.

Jedem von einer Fotodiode gebildeten Empfängern 7a, 7b ist eine Entkopplungsdiode 16a, 16b zugeordnet.

Die die Empfänger 7a, 7b bildenden Fotodioden sind über die Entkopplungsdioden 16a, 16b an einen gemeinsamen Vorverstärker 17 angeschlossen. In diesem Vorverstärker 17 werden die Empfangssignale der Empfänger 7a, 7b einzeln verstärkt, was deshalb möglich ist, da die Empfänger 7a, 7b einzeln nacheinander verstärkt werden.

Generell können die Empfangssignale aller Empfänger 7a-7h in einem Vorverstärker 17 verstärkt werden. Generell ist es auch möglich, dass mehrere Vorverstärker 17 vorhanden sind, in welchen jeweils die Empfangssignale einer Gruppe von Empfängern 7a-7h verstärkt werden. Die in dem oder den Vorverstärkern 17 vorverstärkten Signale werden einem Sammelverstärker 20 zugeführt, dort nochmals verstärkt und dann der Steuerlogik 9 zugeführt.

Erfindungsgemäß ist jedem Empfänger 7a, 7b, ... eine Anordnung von parallel geschalteten Arbeitswiderständen 18a, 19a, 18b, 19b, ... zugeschaltet.

Im vorliegenden Fall sind jedem Empfänger 7a, 7b, ... zwei parallel geschaltete Arbeitswiderstände 18a, 19a, 18b, 19b, ... zugeordnet. Generell können jedem Empfänger 7a, 7b, ... auch mehr als zwei parallel geschaltete Arbeitswiderstände 18a, 19a, 18b, 19b, ... zugeordnet sein.

Mit jedem Paar von Arbeitswiderständen 18a, 19a, 18b, 19b, ... wird der Arbeitspunkt der zugeordneten, einen Empfänger 7a, 7b, ... bildenden Fotodiode vorgegeben und stabilisiert.

Der Arbeitspunkt einer Fotodiode wird dadurch aktiviert, dass das zugeordnete FlipFlop 11a, 11b über die Steuerlogik 9 adressiert ist. Das FlipFlop 11a, 11b hat dann an seinem Ausgang einen Low-Pegel, so dass die Diode der Fotodiode auf Masse 13 liegt. Über die Arbeitswiderstände 18a, 19a, 18b, 19b, ... fließt dann ein Strom aus dem Vorverstärker 17 durch die Entkopplungsdiode 16a, 16b. Damit ist die Entkopplungsdiode 16a, 16b zum Vorverstärker 17 durchgeschaltet. Durch den Spannungsabfall an den Arbeitswiderständen 18a, 19a, 18b, 19b, ... erhöht die Fotodiode eine Spannung an der Kathode.

Mit dem den Empfängern 7a, 7b, ... zugeordneten, parallel geschalteten Arbeitswiderständen 18a, 19a, 18b, 19b, ... wird die Fehlersicherheit des Lichtvorhangs 1 erhöht.

Insbesondere geht bei einem Kurzschluss im Arbeitswiderstand 18a, 19a, 18b, 19b, ... der zugeordnete Empfänger 7a-7h in einen sicheren Zustand über.

Dabei kann der Empfänger 7a-7h im sicheren Zustand kein Licht empfangen.

Weiterhin sind die einem Empfänger 7a-7h zugeordneten Arbeitswiderstände 18a, 19a, 18b, 19b, ... so dimensioniert, dass bei Unterbrechung eines Arbeitswiderstands 18a, 19a, 18b, 19b, ... der Arbeitspunkt des Empfängers 7a-7h aufrechterhalten wird.

Weiterhin werden Fehlerzustände bedingt durch Unterbrechung eines Arbeitswiderstands 18a oder 19b ... vermieden.

Liegt beispielsweise für die den Empfänger 7a bildende Fotodiode eine Unterbrechung des Arbeitswiderstands 18a vor, würde die Fotodiode evtl. aktiv ohne dass diese adressiert war. Das könnte dazu führen, dass gleichzeitig mehrere Fotodioden an den Vorverstärker 17 durchgeschaltet sind, da bereits ein kleiner Fotostrom aus der Fotodiode die jeweilige Entkopplungsdiode 16a, 16b durchschaltet. Der Summenstrom von mehreren Empfängern 7a-7h kann dann ein Erkennen von Licht am Empfänger 7a-7h vortäuschen, so dass dadurch eine Lichtunterbrechung des adressierten Strahls nicht erkannt wird, weil Licht die Nachbar-Lichtstrahlen 3 beleuchtet.

Durch die Parallelschaltung des weiteren Arbeitswiderstands 19a wird im kritischen Fehlerfall (Unterbrechung) dafür gesorgt, dass trotzdem eine korrekte Arbeitsweise aufrechterhalten wird, d.h. der o.g. Fehler wird vermieden.

In einer weiteren Ausführungsform bilden die einem Empfänger 7a-7h zugeordneten, parallel geschalteten Arbeitswiderstände 18a, 19a, 18b, 19b, ... eine diversitäre Anordnung, um Fehlerursachen mit gemeinsamer Ursache auszuschließen.

Die diversitäre Anordnung von Arbeitswiderständen 18a, 19a, 18b, 19b, ... kann dadurch erzielt werden, dass die Arbeitswiderstände 18a, 19a, 18b, 19b, ... unterschiedliche Widerstandswerte aufweisen.

Alternativ oder zusätzlich können die Arbeitswiderstände 18a, 19a, 18b, 19b, ... unterschiedliche Bauformen aufweisen.

Alternativ oder zusätzlich können die Arbeitswiderstände 18a, 19a, 18b, 19b, ... in unterschiedlichen Technologien hergestellt sein.

Schließlich ist es möglich, dass die Arbeitswiderstände 18a, 19a, 18b, 19b, ... auf oder an Elektronikkomponenten in unterschiedlicher Orientierung und/oder Platzierung angeordnet sind.

Dabei sind vorteilhaft die Elektronikkomponenten Leiterplatten.

Beispielsweise können die Arbeitswiderstände 18a, 19a, 18b, 19b, ... auf unterschiedlichen Ebenen zu Leiterplatten angeordnet sein.

### Bezugszeichenliste

- (1): Lichtvorhang
- (2): Sendereinheit
- (2a): Gehäuse
- (3): Lichtstrahl
- (3a): Lichtimpuls
- (4a-4h): Sender
- (5): Sendersteuerung
- (6): Empfängereinheit
- (6a): Gehäuse
- (7a-7h): Empfänger
- (8): Auswerteeinheit
- (9): Steuerlogik
- (10): Schiebekette
- (11a-11h): FlipFlop
- (12): Spannungsversorgung
- (13): Masse
- (14): Taktleitung
- (15): Steuerleitung
- (16a,b ...): Entkopplungsdiode
- (17): Vorverstärker
- (18a,b ...): Arbeitswiderstand
- (19a,b ...): Arbeitswiderstand
- (20): Sammelverstärker

- (O): Objekt

## Patentansprüche

1. Lichtvorhang (1) zur Erfassung von Objekten (O) in einem Überwachungsbereich mit einer Reihenanordnung von Lichtstrahlen (3) emittierenden Sendern (4a-4h), mit einer Reihenanordnung von Lichtstrahlen (3) emittierenden Empfängern (7a-7h), wobei bei freiem Überwachungsbereich die Lichtstrahlen (3) der Sender (4a-4h) durch den Überwachungsbereich geführt sind und auf einen zugeordneten Empfänger (7a-7h) treffen, und wobei bei einem Objekteingriff im Überwachungsbereich die Lichtstrahlen (3) wenigstens eines Senders (4a-4h) unterbrochen sind, und mit einer Auswerteeinheit (8), in welcher abhängig von Empfangssignalen der Empfänger (7a-7h) ein Objektfeststellungssignal generiert wird, **dadurch gekennzeichnet, dass** jedem Empfänger (7a-7h) wenigstens zwei parallel geschaltete Arbeitswiderstände (18a, 19a, 18b, 19b, ...) zugeordnet sind.

2. Lichtvorhang (1) nach Anspruch 1, **dadurch gekennzeichnet, dass** jedem Empfänger (7a-7h) zwei oder mehr parallel geschaltete Arbeitswiderstände (18a, 19a, 18b, 19b, ...) zugeordnet sind.

3. Lichtvorhang (1) nach einem der Ansprüche 1 oder 2, **dadurch gekennzeichnet, dass** jeder Empfänger (7a-7h) von einer Fotodiode gebildet ist.

4. Lichtvorhang (1) nach einem der Ansprüche 1 bis 3, **dadurch gekennzeichnet, dass** mit den parallel geschalteten Arbeitswiderständen (18a, 19a, 18b, 19b, ...) der Arbeitspunkt des zugeordneten Empfängers (7a-7h) stabilisiert ist.

5. Lichtvorhang (1) nach Anspruch 4, **dadurch gekennzeichnet, dass** die einem Empfänger (7a-7h) zugeordneten Arbeitswiderstände (18a, 19a, 18b, 19b, ...) so dimensioniert sind, dass bei Unterbrechung eines Arbeitswiderstands (18a, 19a, 18b, 19b, ...) der Arbeitspunkt des Empfängers (7a-7h) aufrechterhalten wird.

6. Lichtvorhang (1) nach einem der Ansprüche 3 und 5, **dadurch gekennzeichnet, dass** bei Unterbrechung eines Arbeitswiderstands (18a, 19a, 18b, 19b, ...) der Reststrom des jeweiligen Empfängers (7a-7h) größer ist als der Fotostrom der Fotodiode im beleuchteten Zustand.

7. Lichtvorhang (1) nach einem der Ansprüche 1 bis 6, **dadurch gekennzeichnet, dass** bei einem Kurzschluss der Arbeitswiderstände (18a, 19a, 18b, 19b, ...) der zugeordnete Empfänger (7a-7h) in einen sicheren Zustand übergeht.

8. Lichtvorhang (1) nach Anspruch 7, **dadurch gekennzeichnet, dass** der Empfänger (7a-7h) im sicheren Zustand kein Licht empfangen kann.

9. Lichtvorhang (1) nach einem der Ansprüche 1 bis 8, **dadurch gekennzeichnet, dass** die einem Empfänger (7a-7h) zugeordneten, parallel geschalteten Arbeitswiderstände (18a, 19a, 18b, 19b, ...) eine diversitäre Anordnung bilden.

10. Lichtvorhang (1) nach Anspruch 9, **dadurch gekennzeichnet, dass** die Arbeitswiderstände (18a, 19a, 18b, 19b, ...) unterschiedliche Widerstandswerte aufweisen.

11. Lichtvorhang (1) nach einem der Ansprüche 9 oder 10, **dadurch gekennzeichnet, dass** die Arbeitswiderstände (18a, 19a, 18b, 19b, ...) unterschiedliche Bauformen aufweisen.

12. Lichtvorhang (1) nach einem der Ansprüche 9 bis 11, **dadurch gekennzeichnet, dass** die Arbeitswiderstände (18a, 19a, 18b, 19b, ...) auf oder an Elektronikkomponenten in unterschiedlicher Orientierung und/oder Platzierung angeordnet sind.

13. Lichtvorhang (1) nach Anspruch 12, **dadurch gekennzeichnet, dass** die Elektronikkomponenten Leiterplatten sind.

14. Lichtvorhang (1) nach einem der Ansprüche 9 bis 13, **dadurch gekennzeichnet, dass** die Arbeitswiderstände (18a, 19a, 18b, 19b, ...) in unterschiedlichen Technologien hergestellt sind.

15. Lichtvorhang (1) nach einem der Ansprüche 1 bis 14, **dadurch gekennzeichnet, dass** die Empfänger (7a-7h) über eine Schiebekette (10) angesteuert werden.

16. Lichtvorhang (1) nach einem der Ansprüche 1 bis 15, **dadurch gekennzeichnet, dass** die Sender (4a-4h) in einer Sendereinheit (2) und die Empfänger (7a-7h) in einer Empfängereinheit (6) integriert sind, wobei die Sendereinheit (2) und die Empfängereinheit (6) an gegenüberliegenden Rändern des Überwachungsbereichs angeordnet sind.

17. Lichtvorhang (1) nach einem der Ansprüche 1 bis 15, **dadurch gekennzeichnet, dass** dieser ein Reflexions-Lichtvorhang (1) ist.

18. Lichtvorhang (1) nach einem der Ansprüche 1 bis 17, **dadurch gekennzeichnet, dass** dieser ein Sicherheitssensor ist.

19. Verfahren zur Erfassung von Objekten (O) in einem Überwachungsbereich mittels eines Lichtvorhangs (1) mit einer Reihenanordnung von Lichtstrahlen (3) emittierenden Sendern (4a-4h), mit einer Reihenanordnung von Lichtstrahlen (3) emittierenden Empfängern (7a-7h), wobei bei freiem Überwachungsbereich die Lichtstrahlen (3) der Sender (4a-4h) durch den Überwachungsbereich geführt sind und auf einen zugeordneten Empfänger (7a-7h) treffen, und wobei bei einem Objekteingriff im Überwachungsbereich die Lichtstrahlen (3) wenigstens eines Senders (4a-4h) unterbrochen sind, und mit einer Auswerteeinheit (8), in welcher abhängig von Empfangssignalen der Empfänger (7a-7h) ein Objektfeststellungssignal generiert wird, **dadurch gekennzeichnet, dass** jedem Empfänger (7a-7h) wenigstens zwei parallel geschaltete Arbeitswiderstände (18a, 19a, 18b, 19b, ...) zugeordnet sind.
